# EUROPEAN PATENT SPECIFICATION

(11) **EP 0 487 010 B1**
(45) Date of publication and mention of the grant of the patent: **20.03.1996**
(21) Application number: 91119678.0
(22) Date of filing: 19.11.1991
(51) Int. Cl.: G03C 1/28, G03C 1/22, C09B 23/10

(54) **Improved sensitization of tabular grains with a zeromethine dye and a tetraazaindene**
Verbesserte Sensibilisierung von T-Körnern mit einem Nullmethinfarbstoff und einem Tetraazainden
Sensibilisation améliorée des grains tabulaires avec un colorant zérométhine et un tétraazaindène

(30) Priority: 21.11.1990 US 616548
(43) Date of publication of application: 27.05.1992
(73) Proprietor: E.I. DU PONT DE NEMOURS AND COMPANY, Wilmington Delaware 19898 (US)
(72) Inventor: Fabricius, Dietrich Max, Hendersonville, North Carolina 28739 (US); Elkins, Tammy M., Hendersonville, North Carolina 28739 (US); Schoenberg, Allan R., Ashville, North Carolina 28804 (US); Hoyte, Otho Parker Athelson, Hendersonville, North Carolina 28739 (US)
(74) Representative: Werner, Hans-Karsten, Dr.

(56) References cited:
- DE-A- 1 917 163
- DE-A- 2 015 158
- E.J.BIRR 'Stabilization of Photographic Silver Halide Emulsions' 1974 , FOCAL PRESS , LONDON,NEW YORK

## Description

### Cross Reference to Related Application

This application is related to USSN 07/412,536, filed 09/22/89, and is an improvement thereover.

### Field of the Invention

This invention relates to photographic silver halide emulsions and to the sensitization of these emulsions. Still more particularly, this invention relates to tabular grain silver halide emulsions that are especially sensitized with a combination of a zeromethine dye and a tetraazaindene compound.

### Background of the Invention

Emulsions which contain essentially tabular silver halide grains are well known in the prior art. These grains provide some advantages over more conventional, spherical grains. For example, silver halide X-ray elements containing tabular grains can be fully forehardened and yet maintain excellent covering power. This is an advantage over conventional X-ray elements containing spherical grains which are normally hardened during the processing steps. Additionally, tabular grains can be coated at a lower coating weight and thus have a silver savings over elements containing conventional grains. Also, elements containing tabular grains sometimes exhibit a higher speed than those with spherical grains. There is, however, an ever present need to increase this sensitization. Since tabular grains have very low sensitivity to blue light, there is a pressing need to provide satisfactory spectral sensitizing dyes therefore and thus be able to use all the advantages provided by these tabular grains. Spectral sensitizing dyes which J-aggregate are also well known in the prior art. J-aggregation causes a single dye, or a mixture of dyes, to shift the absorption maxima to a longer wavelength, for example. Dyes which J-aggregate are of major practical importance since they are sharp and have high absorption coefficients giving selective sensitization. Although a number of dyes have been reported as being particularly useful with tabular grains, few or none appear to possess the ability to J-aggregate thereon in the 400 to 500 nm spectral range. One such J-aggregating dye system for use with tabular grain elements are the zeromethine dyes referred to in the aforementioned application USSN 07/412,536, filed 09/22/89 which is incorporated herein by reference. These dyes have considerable advantage over other dyes reported to be useful with tabular grains since they not only sensitize the grains fully but leave little or no dye stain.

The use of tetraazaindenes as stabilizers or antifoggants with silver halide elements is well-known in the prior art. These compounds are fully described in U.S. Pat. No. 2,886,437 and the references contained therein. These antifoggants or stabilizers are usually added in order to control emulsion fog and to improve the long term stability of the coated films made from emulsions containing these products. However, when enough of the stabilizer is added, sometimes speed is lost and this presents another problem.

E.J.BIRR "Stabilization of Photographic Silver Halide Emulsions", chapter 4.1.3. discloses the influence of tetraazaindene on the spectral sensitivity of sensiti-zing dyes in photographic silver halide emulsions although there is no indication at all of how the sensitization with zeromethine dyes would be effected; moreover, tabular emulsions are not mentioned.

### SUMMARY OF THE INVENTION

It is an object of this invention to provide a spectrally sensitized tabular silver halide element with improved speed, contrast, top density and gradient. It is another object of this invention to provide such an emulsion having low fog. A still further object is to provide a tabular silver halide X-ray element which has good spectral efficiency and low residual dye stain. These and yet other objects are achieved in a photographic element comprising a support having at least one photosensitive emulsion coated thereon, said emulsion comprising silver halide grains wherein at least 50% of said grains are tabular silver halide grains with a thickness of at least 0.1 µm, preferably with a thickness of about 0.1 to 0.3 µm, and an aspect ratio of greater than 2:1, dispersed in a binder and having at least one J-aggregating spectral sensitizing dye prior to coating said emulsion, said dye being present in an amount of 0.00029 to 0.0035 mole/mole of silver halide and preferably 0.0007 to 0.001 and having the formula: 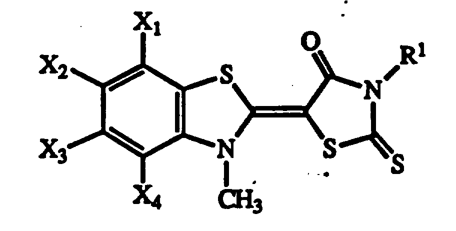 wherein X₁₋₄ independently of the other is halogen, methoxy, hydrogen, trifluoromethyl, or alkyl of 1-3 carbon atoms, R¹ is CH₂CO₂H, (CR"₂)ₙCO₂H, wherein n is 1- 5 and R" is H or alkyl of 1-5 carbon atoms, or salts thereof, CH₂CO₂H-N(R"')₃, wherein R"' is H or alkyl of 1- 10 carbon atoms, or R""O(CH₂CH₂O)ₘCH₂CH--, wherein R"" is H or alkyl of 1-10 carbon atoms and m is 1-10, said emulsion also containing from 0.025 to 0.11 mole/mole of silver halide of a tetraazaindene compound and preferably from 0.035 to 0.055 mole/mole of silver halide.

### DETAILED DESCRIPTION OF THE INVENTION

Zeromethine dyes can be made according to the teachings of the aforementioned USSN 07/412,536, filed 09/22/89 incorporated by reference herein. These dyes appear to J-aggregate and sensitize tabular silver halide grains at about 465 nm. Since most of the energy given off during an X-ray exposure does not expose the silver halide films associated therewith, X-ray film elements are conventionally used with intensifying screens. In this case, the phosphor of the conventional intensifying screen absorbs the X-ray energy and then emits a blue light which is then used to expose the silver halide film. Since some of the more modern X-ray intensifying screens emit light near the 400-500 nm region, the dyes of this invention are particularly useful therewith. When these dyes are added to emulsions containing mainly spherical grains, they appear to desensitize the emulsion. Thus, it was surprising that the effects described above were noted in tabular type emulsions. Examples of specific dye structures useful within the ambit of this invention can be found in Table 1, below, and include:

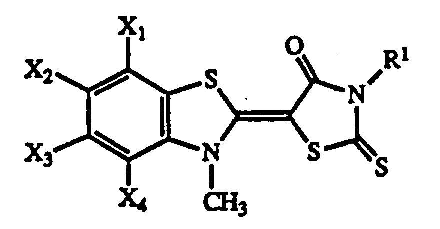

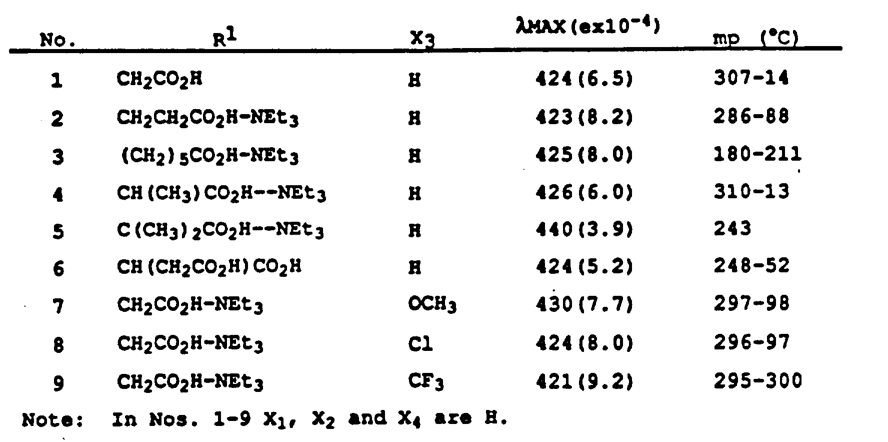

Examples of suitable compounds (without their structure representation as above) include:
5-(3-methyl-2-benzothiazolinylidene)-3- carboxymethylrhodanine
5-(3-methyl-2-benzothiazolinylidene)-3- carboxymethylrhodanine, triethylammonium salt
5-(3-methyl-2-benzothiazolinylidene)-3- carboxymethylrhodanine, tri-n-butyl-ammonium salt
5-(3-methyl-2-benzothiazolinylidene)-3-(2- carboxyethyl)rhodanine, triethylammonium salt
5-(3-methyl-2-benzothiazolinylidene)-3-(1- carboxyethyl)rhodanine, triethylammonium salt
5-(3-methyl-2-benzothiazolinylidene)-3-(5- carboxyethyl)rhodanine, triethylammonium salt
5-(3-methyl-2-benzothiazolinylidene)-3-2-(2- carboxypropyl)rhodanine, triethylammonium salt
5-(3-methyl-2-benzothiazolinylidene)-3-1-(1,3- dicarboxypropyl) rhodanine
5-(5-methoxy-3-methyl-2-benzothiazolinylidene)-3- carboxymethyl)rhodanine, triethylammonium salt
5-(5-chloro-3-methyl-2-benzothiazolinylidene)-3- carboxymethyl)rhodanine, triethylammonium salt
5-(5-trifluoromethyl-3-methyl-2-benzothiazolinylidene)- 3-carboxymethyl) rhodanine, triethylammonium salt

These dyes may be dissolved in any of a host of suitable solvents including phenylethanol, hexafluoroisopropanol, methyl sulfoxide, methanol, phenoxyethanol, etc. or mixtures of these with water or amines, for example. Preferably, the dyes can be added as a concentrated slurry in the aforementioned solvents to the tabular grain emulsions in amounts ranging from 0.00029 to 0.0035 mole of dye per mole of silver halide and preferably from 0.00049 to 0.00015 mole per mole of silver bromide. A solution of these dyes may also be employed within the metes and bounds of this invention. The dyes are preferably added to the tabular grain emulsions prior to chemical sensitization, e.g. prior to the addition of gold and sulfur salts, for example, although they may be added at any time during the preparation of the grains and prior to coating thereof.

Tetraazaindene compounds useful within the ambit of this invention are legion in number and are fully described in U.S. 2,886,437 and the patents cited therein. These include tetraazaindenes of the following structure: 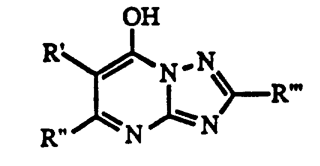 where R' is H, alkyl of 1-10 carbon atoms, carboxy, an alkyl-carbonyl group an aralkyl, or aryl group; R'' is H, alkyl of 1-10 carbon atoms, and R''' is H or alkyl of 1-10 carbon atoms, or substituted or unsubstituted aromatic ring, or SR'''', wherein R'''' is alkyl of 1-20 carbon atoms. Preferred tetraazaindenes are one of: 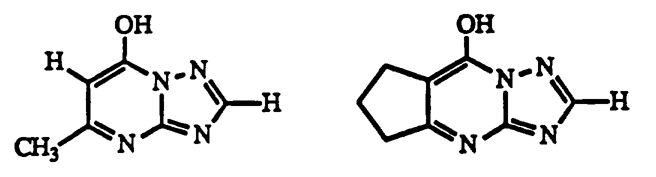 A particularly preferred compound is 4-hydroxy-6-methyl-1,3,3a,7-tetraazaindene (Compound A) with the following structure:

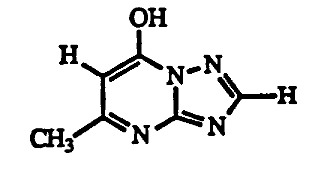

Tabular grain silver halide products are well-known in the prior art and present the user with some considerable advantages over conventional grain products, e.g., semispheroidal grains, for example. The tabular products can usually be coated at a much thinner coating weight without loss of covering power. They are also more easily developed and can be hardened with greater amounts of conventional hardeners presenting quite an advantage over the conventional grains. Tabular chloride emulsions are also well-known and are described by Maskasky in U.S. 4,400,463, 8/23/83 and also by Wey, U.S. 4,399,205. Some other references which describe the manufacture and use of tabular grain elements are Dickerson, U.S. 4,414,304; Wilgus et al., U.S. 4,434,226; and Kofron et al., U.S. 4,439,520.

As employed herein the term "tabular" is defined as requiring that silver halide grains have a thickness of less than 0.5 µm (preferably less than 0.3 µm ) and a diameter of at least 0.2 µm have an average aspect ratio of greater than 2:1 and account for a least 50 percent of the total projected area of the silver halide grains present in the emulsion.

The grain characteristics described above of the silver halide emulsions of this invention can be readily ascertained by procedures well known to those skilled in the art. As employed herein, the term "aspect ratio" refers to the ratio of the diameter of the grain to its thickness. From shadowed electron micrographs of emulsion samples, it is possible to determine the thickness of each grain and calculate an average therefrom. The average diameter of the grains is in turn determined from their area by assuming that said area is the ratio of the median volume (as measured independently by a conventional Electrolytic Grain Size Analyzer - EGSA) and from the thickness as determined from the aforesaid electron micrograph described above. Thus, we can identify those tabular gains having a thickness of less than 0.5 µm (or 0.3 µm ) and calculate a diameter of at least 0.2 µm. From this, the aspect ratio of each such tabular grain can be calculated, and the aspect ratios of all the tabular grains in the sample meeting the thickness and diameter criteria, can be averaged to obtain their average aspect ratio. By this definition the average aspect ratio is the average of individual tabular grains aspect ratios. In practice it is usually simpler to obtain an average thickness and an average diameter of the tabular grains having a thickness of less than 0.5 (or 0.3) µm and a diameter of at least 0.2 µm and to calculate the average aspect ratio as the ratio of these two averages. Whether the averaged individual aspect ratios or the averages of thickness and diameter are used to determine the average aspect ratio, within the tolerance of grain measurements contemplated, the average aspect ratios obtained to not significantly differ. The projected areas of the silver halide grains meeting the thickness and diameter criteria can be summed, the projected areas of the remaining silver halide grains in the photomicrograph can be summed separately, and from the two sums the percentage of the total projected area of the silver halide grains provided by the grains meeting the thickness and diameter criteria can be calculated.

Any of the conventional halides may be used for the preparation of silver halide grains, but we prefer pure silver bromide or silver bromide with small amounts of iodide incorporated therein, e.g., 98% Br and 2% I, for example.

Particularly preferred processes for preparing tabular silver halide elements useful within the metes and bounds of this invention are contained in Nottorf, U.S. 4,722,886, 02/02/88 and in Ellis, U.S. 4,801,552, 01/31/89. These teachings, which are incorporated herein by reference, describe processes by which high speed tabular silver halide grains may be made with a narrow grain size distribution.

After the tabular grains are made as described in the aforesaid Nottorf and Ellis references, they are usually dispersed with larger amounts of binder, e.g. gelatin or other well-known binders such as polyvinyl alcohol, phthalated gelatins, etc. In place of gelatin other natural or synthetic water-permeable organic colloid binding agents can be used as a total or partial replacement thereof. Such agents include water permeable or water-soluble polyvinyl alcohol and its derivatives, e.g., partially hydrolyzed polyvinyl acetates, polyvinyl ethers, and acetals containing a large number of extralinear -CH₂CHOH- groups; hydrolyzed interpolymers of vinyl acetate and unsaturated addition polymerizable compounds such as maleic anhydride, acrylic and methacrylic acid ethyl esters, and styrene. Suitable colloids of the last mentioned typed are disclosed in U.S. Patents 2,276,322, 2,276,323 and 2,347,811. The useful polyvinyl acetals include polyvinyl acetalaldehyde acetal, polyvinyl butyraldehyde acetal and polyvinyl sodium o-sulfobenzaldehyde acetal. Other useful colloid binding agents include the poly-N-vinyllactams of Bolton U.S. Patent 2,495,918, the hydrophilic copolymers of N-acrylamido alkyl betaines described in Shacklett U.S. Patent 2,833,650 and hydrophilic cellulose ethers and esters. Phthalated gelatins may also be used as well as binder adjuvants useful for increasing covering power such as dextran or the modified, hydrolysed gelatins of Rakoczy, U.S. 3,778,278. As mentioned, these tabular silver halide emulsions may be chemically sensitized with salts of gold and sulfur as well known to those reasonably skilled in the art. Sulfur sensitizers include those which contain labile sulfur, e.g., allyl isothiocyanate, allyl diethyl thiourea, phenyl isothiocyanate, tetramethylthiuram monosulfide and sodium thiosulfate for example. The polyoxyalkylene ethers in Blake et al., U.S. Patent 2,400,532, and the polyglycols disclosed in Blake et al., U.S. Patent 2,423,549 may also be used herein. Other non-optical sensitizers such as amines as taught by Staud et al., U.S. Patent 1,925,508 and Chambers et al., U.S. 3,026,203, and metal salts as taught by Baldsiefen, U.S. Patent 2,540,086 may also be used. Preferably, we add the J-aggregating spectral sensitizing dyes of this invention during the chemical sensitization step noted above, although these dyes may be added at any time during the emulsion manufacture and before coating on a support.

The emulsions can contain other known antifoggants in addition to the tetraazaindenes describe above, e.g., 6-nitrobenzimidazole, benzotriazole, etc., as well as the usual hardeners, i.e., chrome alum, formaldehyde, dimethylol urea, mucochloric acid, etc. Other emulsion adjuvants that may be added comprise matting agents, plasticizers, toners, optical brightening agents, surfactants, image color modifiers, nonhalation dyes, and covering power adjuvants among others.

The film support for the emulsion layers used in the novel process may be any suitable transparent plastic. For example, the cellulosic supports, e.g., cellulose acetate, cellulose triacetate, cellulose mixed esters, etc. may be used. Polymerized vinyl compounds, e.g., copolymerized vinyl acetate and vinyl chloride, polystyrene, and polymerized acrylates may also be mentioned. Preferred films include those formed from the polyesterification product of a dicarboxylic acid and a dihydric alcohol made according to the teachings of Alles, U.S. Patent 2,779,684 and the patents referred to in the specification thereof. Other suitable supports are the polyethylene terephthalate/isophthalates of British Patent 766,290 and Canadian Patent 562,672 and those obtainable by condensing terephthalic acid and dimethyl terephthalate with propylene glycol, diethylene glycol, tetramethylene glycol or cyclohexane 1,4-dimethanol (hexahydro-p-xylene alcohol). The films of Bauer et al., U.S. Patent 3,052,543 may also be used. The above polyester films are particularly suitable because of their dimensional stability.

When polyethylene terephthalate is manufactured for use as a photographic support, the polymer is cast as a film, the mixed polymer subbing composition of Rawlins U.S. Pat. 3,567,452 is applied and the structure is then biaxially stretched, followed by application of a gelatin subbing layer. Upon completion of stretching and the application of subbing compositions, it is necessary to remove strain and tension in the base by a heat treatment comparable to the annealing of glass. Air temperatures of from 100°C to 160°C are typically used for this heat treatment, which is referred to as the post-stretch heat relax.

The emulsions may be coated on the supports mentioned above as a single layer or multi-layer element. For medical X-ray applications, for example, where silver coating weights are generally high, layers of emulsion are coated on both sides of the support which conventionally contains a dye to impart a blue tint thereto. Contiguous to the emulsion layers it is conventional, and preferable, to apply a thin stratum of hardened gelatin supra to said emulsion to provide protection thereto.

### EXAMPLE 1

A silver bromide tabular emulsion was made according to the teachings of the aforementioned Ellis patent U.S. 4,801,552, 01/31/89. After precipitation of the grains the average aspect ratio was determined to be about 5:1 and thickness of about 0.2 µm. These grains were dispersed in photographic grade gelatin (about 117 grams gelatin/mole of silver bromide) The emulsion was brought to its optimum sensitivity with gold and sulfur salts as is well-known to those skilled in the art. A solution of 250 mg of Dye 1 (see Table 1) and 160 to 200 mg tributylamine in 2.9 ml methanol was added to achieve 150-217 mg of dye per mole silver halide as shown below. The emulsion was then stabilized by the addition of 4- hydroxy-6-methyl-1,3,3a,7-tetraazaindene (at 4.16 g/mol of silver bromide present) and 1-phenyl-5- mercaptotetrazole. The usual wetting agents, coating aides and hardeners were added and this emulsion was then coated on a dimensionally stable, 178 µm (7 mil) polyethylene terephthalate film support which had first been coated with a conventional resin sub followed by a thin substratum of hardened gelatin applied supra thereto. These subbing layers were present on both sides of the support. The emulsion was coated on each side at about 2 g/m. A thin abrasion layer of hardened gelatin was applied over each of the emulsion layers. Samples of these coatings were given an exposure through a test target and a conventional step wedge to X-rays interacting with an X-ray intensifying screen and then developed in a conventional X-ray film processor. Evaluation of the samples are summarized in Table 1 as follows:

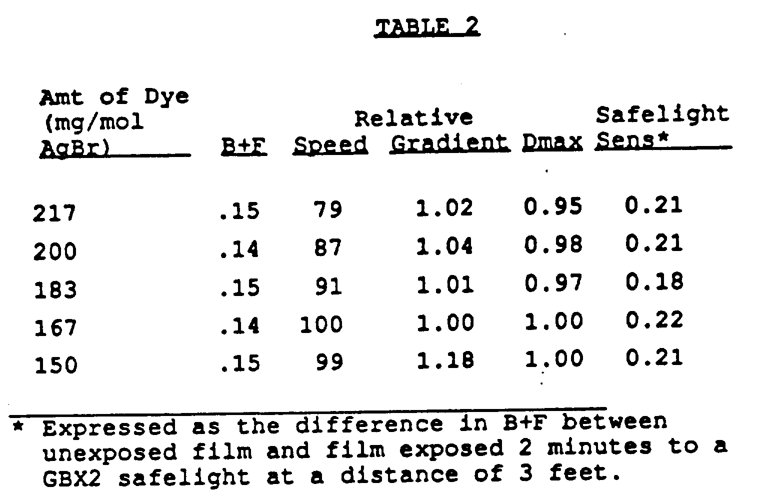

This example shows that no improvement in sensitivity is obtained when only the amount of the sensitizing dye of this invention is varied.

### EXAMPLE 2

An emulsion similar to that of Example 1 was prepared but with only one level of the sensitizing dye (167 mg/mole of silver halide). This particular emulsion was then split into five (5) portions and differing amounts of 4-hydroxy-6-methyl-1,3,3a,7-tetraazaindene (Compound A) added thereto. The emulsions were coated, dried, exposed and developed as described in Example 1 with the following results:

**Table 3**

| Amt of Compound A (g/mol silver halide | Relative | | | | Safelight Sens* |
|---|---|---|---|---|---|
| | B+F | Speed | Gradient | Dmax | |
| 2.77 | .14 | 100 | 1.00 | 1.00 | 0.41 |
| 4.16 | .16 | 109 | 1.17 | 1.13 | 0.42 |
| 8.32 | .15 | 107 | 0.99 | 1.01 | 0.57 |
| 13.87 | .15 | 107 | 0.99 | 1.02 | 0.52 |

This example demonstrates that increasing the tetraazaindene alone will not greatly affect sensitometry.

### EXAMPLE 3

An emulsion similar to that of Example 1 was prepared and split into nine (9) portions to which differing amounts of Dye 1 and Compound A were added (shown as mg/mol of silver halide).The emulsions were coated, dried, exposed and developed as described in Example 1 and the results shown below:

**Table 4**

| Amount of | | Relative | | | | Safelight Sens |
|---|---|---|---|---|---|---|
| Dye 1 | Cmpd.A g/mol silver halide | B+F | Speed | Gradient | Dmax | |
| 90 | 2.77 | .14 | 41 | 0.62 | 0.87 | 0.0 |
| 90 | 4.16 | .14 | 58 | 0.72 | 0.97 | 0.0 |
| 90 | 5.54 | .15 | 78 | 0.93 | 1.00 | 0.23 |
| 167 | 2.77 | .14 | 100 | 1.00 | 1.00 | 0.22 |
| 167 | 4.16 | .14 | 114 | 0.98 | 1.00 | 0.29 |
| 167 | 5.54 | .15 | 123 | 1.04 | 1.09 | 0.21 |
| 217 | 2.77 | .14 | 98 | 1.09 | 1.07 | 0.25 |
| 217 | 4.16 | .14 | 122 | 0.98 | 1.00 | 0.28 |
| 217 | 5.54 | .14 | 135 | 1.06 | 1.02 | 0.30 |

This example demonstrates the synergistic improvement in sensitometric properties when concentrations of Dye 1 and Compound A are simultaneously increased. These improvements are significantly greater than those obtained with either the concentration of the dye alone or the tetraazaindene alone independently increased as shown in Examples 1 and 2.

### EXAMPLE 4

An emulsion similar to that described in Example 1 was prepared and split into eleven (11) portions. Differing amounts of Dye 1 and Compound A were added as described in Example 3. Each portion was then coated, dried, exposed and processed as described in Example 1 with the following results:

**Table 5**

| Amount of | | Relative | | | | Safelight Sens |
|---|---|---|---|---|---|---|
| Dye 1 | Cmpd.A g/mol silver halide | B+F | Speed | Gradient | Dmax | |
| 167 | 2.77 | .17 | 100 | 1.00 | 1.00 | 0.06 |
| 167 | 4.16 | .14 | 119 | 1.09 | 1.28 | 0.11 |
| 167 | 5.54 | .14 | 123 | 1.27 | 1.44 | 0.13 |
| 251 | 2.77 | .15 | 157 | 1.50 | 1.29 | 0.24 |
| 251 | 5.54 | .14 | 157 | 1.62 | 1.44 | 0.24 |
| 251 | 8.32 | .14 | 154 | 1.53 | 1.54 | 0.21 |
| 251 | 11.09 | .15 | 158 | 1.51 | 1.56 | 0.30 |
| 334 | 2.77 | .14 | 86 | 1.28 | 1.28 | 0.16 |
| 334 | 5.54 | .17 | 98 | 1.22 | 1.44 | 0.27 |
| 334 | 8.32 | .21 | 95 | 1.24 | 1.60 | 0.28 |
| 334 | 11.09 | .31 | 91 | 1.43 | 1.64 | 0.30 |

This example illustrates that an optimal combination of dye and tetraazaindene will give superior sensitometric results.

### EXAMPLE 5

An emulsion similar to that described in Example 1 was prepared and split into twenty-four (24) portions. Differing amounts of Dye 1 and Compound A were added as described in Example 3. Differing amounts of sulfur sensitizer (tetramethylthiuram monosulfide) were also added as shown below and as reported in mg/mole of silver halide). Each portion was then coated, dried, exposed and processed as described in Example 1 with the following results:

**Table 6**

| Amount of | | Sulfur Sens | Relative | | | |
|---|---|---|---|---|---|---|
| Dye 1 mg/mol silver halide | Cmpd.A g/mol silver halide | | B+F | Speed | Gradient | Dmax |
| 167 | 2.77 | 4.8 | .15 | 57 | 0.81 | 0.39 |
| 167 | 2.77 | 5.8 | .14 | 37 | 0.69 | 0.85 |
| 168 | 2.77 | 7.5 | .14 | 63 | 0.71 | 1.22 |
| 167 | 2.77 | 9.3 | .14 | 100 | 1.00 | 1.00 |
| 209 | 4.16 | 4.8 | .14 | 76 | 0.87 | 0.66 |
| 209 | 4.16 | 5.8 | .14 | 85 | 0.99 | 0.98 |
| 209 | 4.16 | 7.5 | .14 | 160 | 1.33 | 0.98 |
| 209 | 4.16 | 9.3 | .15 | 171 | 1.66 | 0.95 |
| 251 | 5.54 | 4.8 | .14 | 91 | 1.21 | 0.92 |
| 251 | 5.54 | 5.8 | .14 | 164 | 1.81 | 1.00 |
| 251 | 5.54 | 7.5 | .14 | 185 | 1.83 | 0.96 |
| 251 | 5.54 | 9.3 | .15 | 173 | 1.88 | 0.95 |
| 292 | 6.93 | 4.8 | .18 | 103 | 1.78 | 1.01 |
| 292 | 6.93 | 5.8 | .14 | 126 | 1.39 | 0.93 |
| 292 | 6.93 | 7.5 | .16 | 121 | 1.29 | 0.96 |
| 292 | 6.93 | 9.3 | .18 | 94 | 1.35 | 0.98 |
| 333 | 8.32 | 4.8 | .29 | 86 | 1.68 | 1.00 |
| 333 | 8.32 | 5.8 | .19 | 80 | 1.06 | 0.92 |
| 333 | 8.32 | 7.5 | .26 | 91 | 1.21 | 1.12 |
| 333 | 8.32 | 9.3 | .26 | 58 | 11.82 | 1.04 |
| 418 | 9.71 | 4.8 | .41 | 102 | 1.67 | 1.11 |
| 418 | 9.71 | 5.8 | .34 | 100 | 1.53 | 1.09 |
| 418 | 9.71 | 7.5 | .32 | 97 | 1.72 | 1.16 |
| 418 | 9.71 | 9.3 | .36 | 89 | 1.23 | 1.02 |

This example demonstrates the synergistic effect between the dye and the tetraazaindene of this invention and a dependency on the concentration of sulfur sensitizer therein. The synergistic effect is optimized only at specific concentrations of sulfur sensitizer.

### EXAMPLE 6

In this example, an emulsion similar to that of Example 1 was prepared and split into twelve (12) portions to which differing amounts of Comparative Dye A and B (structures shown below) and Compound A (a tetraazaindene) were added in amounts shown. For Control purposes, two portions contained Dye 1 of this invention. Each portion was then coated, dried, exposed and processed as described in Example 1 with the following results:

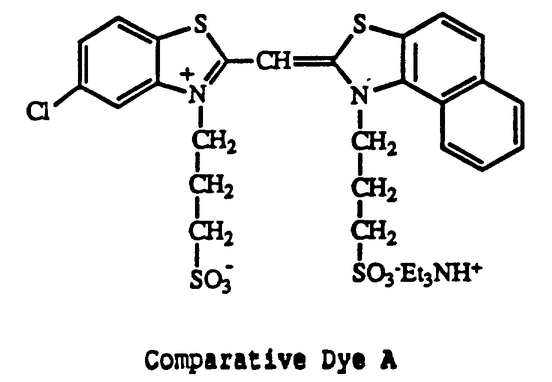

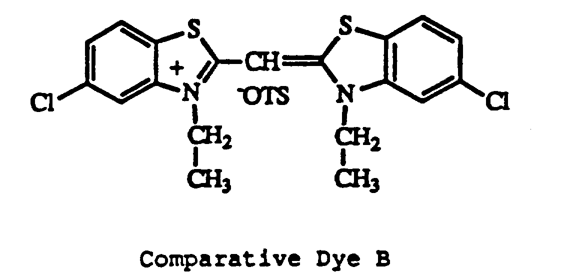

**Table 7**

| Dye Type | Amount of | | Relative | | | |
|---|---|---|---|---|---|---|
| | Dye (mg/mol silver halide | Cmpd. A (g/mol silver halide | B+F | Speed | Gradient | Dmax |
| 1 | 167 | 2.77 | .15 | 100 | 1.00 | 1.00 |
| 1 | 251 | 4.85 | .15 | 132 | 1.00 | 1.03 |
| A | 267 | 2.77 | .16 | 33 | 0.57 | 1.00 |
| A | 267 | 4.16 | .17 | 34 | 0.59 | 1.02 |
| A | 400 | 2.77 | .15 | 11 | 0.63 | 0.91 |
| A | 400 | 4.85 | .15 | 13 | 0.71 | 0.97 |
| A | 534 | 5.54 | .15 | 6 | 0.36 | 0.83 |
| B | 267 | 2.77 | .14 | 56 | 0.64 | 0.99 |
| B | 267 | 4.16 | .14 | 64 | 0.69 | 1.00 |
| B | 400 | 2.77 | .14 | 32 | 0.62 | 1.02 |
| B | 400 | 4.85 | .15 | 37 | 0.68 | 0.96 |
| B | 534 | 5.54 | .15 | 42 | 0.95 | 0.96 |

This example demonstrates that the sensitometric advantages are obtained only when the specific dye described and claimed within this invention is used with the tetraazaindene compound. Prior art Dyes A and B did not function within the metes and bounds of this invention.

### EXAMPLE 7

Example 6 was repeated using two more dye structures (C and D) shown below as comparative tests. For control purposes, two samples using the dye of this invention along with the tetraazaindene, are also shown.

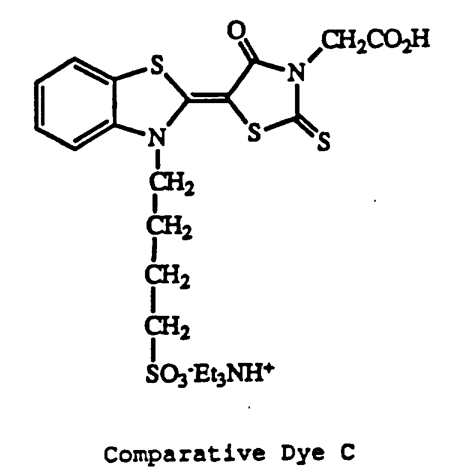

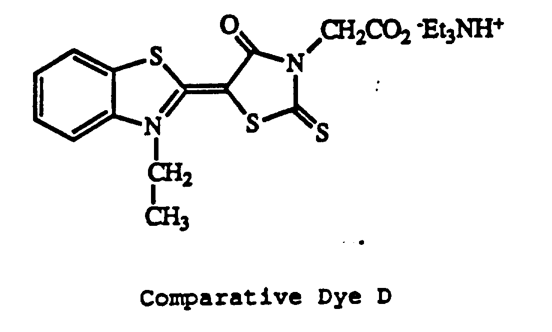

**Table 8**

| Dye Type | Amount of | | Relative | | | |
|---|---|---|---|---|---|---|
| | Dye (mg/mol silver halide | Cmpd. A (g/mol silver halide | B+F | Speed | Gradient | Dmax |
| 1 | 167 | 2.77 | .17 | 100 | 1.00 | 1.00 |
| 1 | 251 | 4.85 | .19 | 110 | 1.00 | 1.02 |
| C | 278 | 2.77 | .15 | 24 | 0.86 | 0.96 |
| C | 278 | 4.16 | .15 | 24 | 0.94 | 0.97 |
| C | 417 | 2.77 | .16 | 22 | 0.98 | 0.87 |
| C | 417 | 4.85 | .16 | 23 | 1.07 | 0.91 |
| C | 556 | 5.54 | .16 | 24 | 1.15 | 0.96 |
| D | 222 | 2.77 | .15 | 29 | 1.10 | 0.95 |
| D | 222 | 4.16 | .15 | 29 | 1.12 | 0.95 |
| D | 333 | 2.77 | .15 | 15 | 0.94 | 0.90 |
| D | 333 | 4.85 | .16 | 15 | 1.05 | 0.91 |
| D | 444 | 5.54 | .15 | 11 | 0.98 | 0.98 |

Once again, sensitization enhancement is achieved only by the use of the dye of this invention together with the tetraazaindene compound.

## Claims

1. A photographic element comprising a support having at least one photosensitive emulsion coated thereon, said emulsion comprising silver halide grains wherein at least 50% of said grains are tabular silver halide grains with a thickness of at least 0.1 µm, preferably with a thickness of about 0.1 to 0.3 µm, and an aspect ratio of greater than 2:1, dispersed in a binder and having at least one J-aggregating spectral sensitizing dye prior to coating said emulsion, said dye being present in an amount of from 0.00029 to 0.0035 mole/mole of silver halide and having the formula: 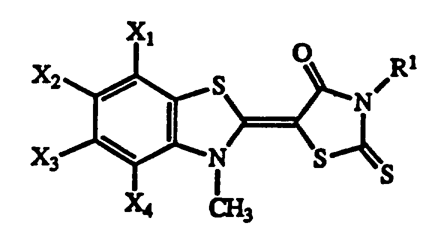 wherein X₁₋₄ independently of the other is halogen, methoxy, hydrogen, trifluoromethyl, or alkyl of 1-3 carbon atoms, R¹ is CH₂CO₂H, (CR"₂)ₙCO₂H, wherein n is 1-5 and R" is H or alkyl of 1-5 carbon atoms, or salts thereof, CH₂CO₂H-N(R"')₃, wherein R"' is H or alkyl of 1- 10 carbon atoms, or R""O(CH₂CH₂O)ₘCH₂CH--, wherein R"" is H or alkyl of 1-10 carbon atoms and m is 1-10, said emulsion also containing from 0.025 to 0.11 mole/mole of silver halide of a tetraazaindene compound.

2. The photographic element of Claim 1 wherein said dye is present in an amount of from 0.0007 to 0.001 mole/mole of silver halide and said tetraazaindene compound is present in an amount of from 0.035 to 0.055 mole/mole of silver halide.

3. The photographic element of Claim 1 wherein X₁₋₄ is H and R' is CH₂CO₂H or its tributylamine salt.

4. The photographic element of Claim 1 wherein said tetraazaindene is

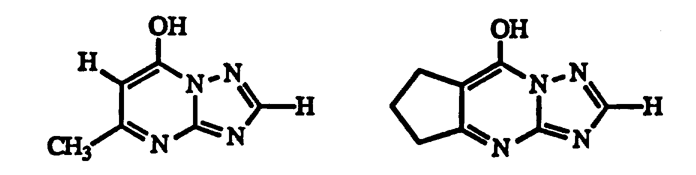

5. The photographic element of Claim 1 wherein said emulsion is sensitized with a sulfur sensitizer and said sensitizer is present in the range of 4 to 15 mg per mole of silver halide.

6. The photographic element of Claim 5 wherein said sulfur sensitizer is tetramethylthiuram monosulfide.

7. The photographic element of Claim 1 wherein the J-aggregating dye is selected from the group consisting of
5-(3-methyl-2-benzothiazolinylidene)-3-carboxymethylrhodanine
5-(3-methyl-2-benzothiazolinylidene)-3-carboxymethylrhodanine, triethylammonium salt
5-(3-methyl-2-benzothiazolinylidene)-3-carboxymethylrhodanine, tri-n-butyl-ammonium salt
5-(3-methyl-2-benzothiazolinylidene)-3-(2-carboxyethyl)rhodanine, triethylammonium salt
5-(3-methyl-2-benzothiazolinylidene)-3-(1-carboxyethyl)rhodanine, triethylammonium salt
5-(3-methyl-2-benzothiazolinylidene)-3-(5-carboxyethyl)rhodanine, triethylammonium salt
5-(3-methyl-2-benzothiazolinylidene) -3-2- (2-carboxypropyl)rhodanine, triethylammonium salt
5-(3-methyl-2-benzothiazolinylidene)-3-1-(1,3-dicarboxypropyl)rhodanine
5-(5-methoxy-3-methyl-2-benzothiazolinylidene)-3-carboxymethyl)rhodanine, triethylammonium salt
5-(5-chloro-3-methyl-2-benzothiazolinylidene)-3-carboxymethyl)rhodanine, triethylammonium salt
5-(5-trifluoromethyl-3-methyl-2-benzothiazolinylidene)-3-carboxymethyl)rhodanine, triethylammonium salt.

## Revendications

1. Un élément photographique comprenant un support ayant reçu l'application d'au moins une émulsion photosensible, ladite émulsion comprenant des grains d'halogénure d'argent dont au moins 50% desdits grains sont des grains d'halogénure d'argent lamellaires d'une épaisseur d'au moins 0,1 µm, de préférence d'une épaisseur d'environ 0,1 à 0,3 µm, et un rapport des dimensions supérieur à 2/1, dispersé dans un liant et renfermant au moins un colorant de sensibilisation spectrale d'agrégation-J avant l'application de ladite émulsion, ledit colorant étant présent en quantités de 0,00029 à 0,0035 mole/mole d'halogénure d'argent et de préférence, 0,0007 à 0,001 et répondant à la formule: 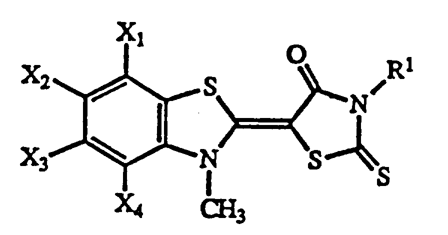 dans laquelle X₁₋₄ indépendamment les uns des autres est un atome d'halogène, un radical méthoxy, un atome d'hydrogène, un radical trifluorométhyle ou alkyle renfermant de 1 à 3 atomes de carbone, R¹ représente CH₂CO₂H, (CR"₂)ₙCO₂H, dans lequel n représente 1 à 5 et R" représente H ou un radical alkyle renfermant de 1 à 5 atomes de carbone, ou leurs sels, CH₂CO₂H-N(R"')₃, dans lequel R"' représente H ou un radical alkyle renfermant de 1 à 10 atomes de carbone, ou R""O(CH₂CH₂O)ₘCH₂CH--, dans lequel R"" représente H ou un radical alkyle renfermant de 1 à 10 atomes de carbone et m est égal 1 à 10, ladite émulsion contenant également de 0,025 à 0,11 mole/mole d'halogénure d'argent et un dérivé de tétraazaindène.

2. L'élément photographique selon la revendication 1, dans lequel ledit colorant est présent en une quantité de 0,0007 à 0,0001 mole/mole d'halogénure d'argent, et ledit dérivé de tétraazaindène est présents en une quantité de 0,035 à 0,055 mole/mole d'halogénure d'argent.

3. L'élément photographique selon la revendication 1, dans lequel X₁₋₄ représente H et R' représente CH₂CO₂H ou son sel de tributylamine.

4. L'élément photographique selon la revendication 1, dans lequel ledit tétraazaindène est

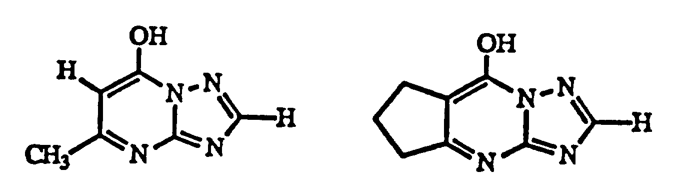

5. L'élément photographique selon la revendication 1, dans lequel ladite émulsion est sensibilisée à l'aide d'un agent de sensibilisation au soufre et ledit agent de sensibilisation est présent en quantité de 4 à 15 mg par mole d'halogénure d'argent.

6. L'élément photographique selon la revendication 5, dans lequel ledit agent de sensibilisation au soufre est le tétraméthylthiurame monosulfure.

7. L'élément photographique selon la revendication 1, dans lequel le colorant d'agrégation-J est choisi dans le groupe constitué par:
5-(3-méthyl-2-benzothiazolinylidène)-3-carboxyméthylrhodanine
sel de triéthylammonium de 5-(3-méthyl-2-benzothiazolinylidène)-3-carboxyméthylrhodanine.
sel de tri-n-butyl-ammonium de 5-(3-méthyl-2-benzothiazolinylidène)-3-carboxyméthylrhodanine.
sel de triéthylammonium de 5-(3-méthyl-2-benzothiazolinylidène)-3-(2-carboxyméthyl)rhodanine.
sel de triéthylammonium de 5-(3-méthyl-2-benzothiazolinylidène)-3-(1-carboxyéthyl)rhodanine
sel de triéthylammonium de 5-(3-méthyl-2-benzothiazolinylidène)-3-(5-carboxyéthyl)rhodanine
sel de triéthylammonium de 5-(3-méthyl-2-benzothiazolinylidène)-3-2-(2-carboxypropyl)rhodanine
5-(3-méthyl-2-benzothiazolinylidène)-3-1-(1,3-dicarboxypropyl)rhodanine
sel de triéthylammonium de 5-(5-méthoxy-3-méthyl-2-benzothiazolinylidène)-3 -carboxyméthyl)rhodanine
sel de triéthylammonium de 5-(5-chloro-3-méthyl-2-benzothiazolinylidène)-3-carboxyméthyl)rhodanine
sel de triéthylammonium de 5-(5-trifluorométhyl-3-méthyl-2-benzothiazolinylidène)-3-carboxyméthyl) rhodanine.

## Patentansprüche

1. Photographisches Element, umfassend einen Träger, der mit wenigstens einer lichtempfindlichen Emulsion beschichtet ist, wobei die Emulsion Silberhalogenid-Körner umfaßt, worin wenigstens 50 % der Körner tafelförmige Silberhalogenid-Körner mit einer Dicke von wenigstens 0,1 µm, vorzugsweise mit einer Dicke von etwa 0,1 bis 0,3 µm undeinem Aspektverhältnis von mehr als 2 : 1 sind, dispergiert in einem Bindemittel, und die wenigstens einen J-aggregierenden spektralsensibilisierenden Farbstoff vor dem Beschichten der Emulsion haben, wobei der Farbstoff in einer Menge von 0,00029 bis 0,0035 mol/mol Silberhalogenid vorhanden ist und die Formel: 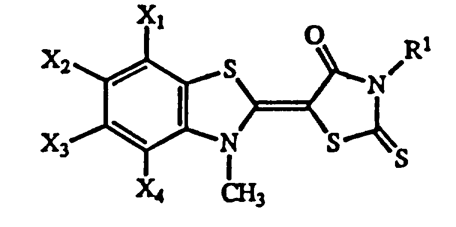 hat, worin X₁₋₄ unabhängig voneinander Halogen, Methoxy, Wasserstoff, Trifluormethyl oder Alkyl mit 1 bis 3 Kohlenstoffatomen ist, R¹ CH₂CO₂H, (CR"₂)ₙCO₂H ist, worin n 1 bis 5 ist und R" H oder Alkyl mit 1 bis 5 Kohlenstoffatomen ist, oder Salze davon, CH₂CO₂H-N(R''')₃, worin R''' H oder Alkyl mit 1 bis 10 Kohlenstoffatomen oder R""O(CH₂CH₂O)ₘCH₂CH- ist, worin R"" H oder Alkyl mit 1 bis 10 Kohlenstoffatomen und m 1 bis 10 ist, wobei die Emulsion auch 0,025 bis 0,11 mol/mol Silberhalogenid einer Tetraazainden-Verbindung enthält.

2. Photographisches Element nach Anspruch 1, worin der Farbstoff in einer Menge von 0,0007 bis 0,001 mol/mol Silberhalogenid vorhanden ist und die Tetraazainden-Verbindung in einer Menge von 0,035 bis 0,055 mol/mol Silberhalogenid vorhanden ist.

3. Photographisches Element nach Anspruch 1, worin X₁₋₄ H ist und R' CH₂CO₂H oder dessen Tributylaminsalz ist.

4. Photographisches Element nach Anspruch 1, worin das Tetraazainden 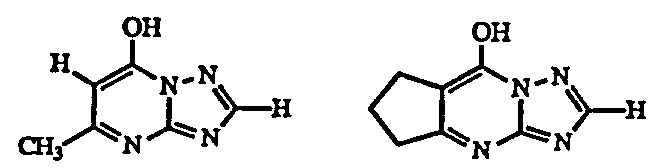 ist.

5. Photographisches Element nach Anspruch 1, worin die Emulsion mit einem Schwefel-Sensibilisator sensibilisiert wird und der Sensibilisator im Bereich von 4 bis 15 mg pro Mol Silberhalogenid vorhanden ist.

6. Photographisches Element nach Anspruch 5, worin der Schwefel-Sensibilisator Tetramethylthiurammonosulfid ist.

7. Photographisches Element nach Anspruch 1, worin der J-aggregierende Farbstoff aus der Gruppe ausgewählt ist, die besteht aus
5-(3-Methyl-2-benzothiazolinyliden)-3-carboxymethylrhodanin
5-(3-Methyl-2-benzothiazolinyliden)-3-carboxymethylrhodanin, Triethylammoniumsalz
5-(3-Methyl-2-benzothiazolinyliden)-3-carboxymethylrhodanin, Tri-n-butylammoniumsalz
5-(3-Methyl-2-benzothiazolinyliden)-3-(2-carboxyethyl)-rhodanin, Triethylammoniumsalz
5-(3-Methyl-2-benzothiazolinyliden)-3-(1-carboxyethyl)-rhodanin, Triethylammoniumsalz
5-(3-Methyl-2-benzothiazolinyliden)-3-(5-carboxyethyl)-rhodanin, Triethylammoniumsalz
5-(3-Methyl-2-benzothiazolinyliden)-3-2-(2-carboxypropyl)rhodanin, Triethylammoniumsalz
5-(3-Methyl-2-benzothiazolinyliden)-3-1-(1,3-dicarboxypropyl)rhodanin
5-(5-Methoxy-3-methyl-2-benzothiazolinyliden)-3-(carboxy- methyl)rhodanin, Triethylammoniumsalz
5-(5-Chlor-3-methyl-2-benzothiazolinyliden)-3-(carboxymethyl)rhodanin, Triethylammoniumsalz
5-(5-Trifluormethyl-3-methyl-2-benzothiazolinyliden)-3-(carboxymethyl)rhodanin, Triethylammoniumsalz.
